# EUROPEAN PATENT APPLICATION

(11) **EP 3 978 650 A1**
(43) Date of publication of application: **06.04.2022**
(21) Application number: 20813482.5
(22) Date of filing: 11.05.2020
(51) Int. Cl.: C25B 9/10, C25B 1/10, C25B 9/00, C25B 11/04, C25B 11/06, C25B 13/04, H01M 8/12, H01M 8/1213

(54) **ELECTROCHEMICAL CELL**

(30) Priority: 27.05.2019 JP 2019098692
(71) Applicant: Panasonic Intellectual Property Management Co., Ltd., Osaka-shi, Osaka 540-6207 (JP)
(72) Inventor: NUNOO, Kosuke, Osaka-shi, Osaka (JP); GOTO, Takehito, Osaka-shi, Osaka (JP); MIKAMI, Yuichi, Osaka-shi, Osaka (JP); TERAYAMA, Takeshi, Osaka-shi, Osaka (JP); ONUMA, Shigenori, Osaka-shi, Osaka (JP); KAKUWA, Takashi, Osaka-shi, Osaka (JP); KAWADA, Kyohei, Osaka-shi, Osaka (JP); KUROHA, Tomohiro, Osaka-shi, Osaka (JP)
(74) Representative: Grünecker Patent- und Rechtsanwälte PartG mbB
(86) International application number: PCT/JP2020/018753
(87) International publication number: WO 2020/241210

(57) **Abstract**

An electrochemical cell according to the present disclosure includes a first electrolyte layer containing an oxide-ion conductor, a second electrolyte layer containing a proton conductor, a first electrode which is disposed between the first electrolyte layer and the second electrolyte layer and in contact with a first principal surface of the first electrolyte layer and a first principal surface of the second electrolyte layer and into which a gas flows, a second electrode which is provided on a second principal surface of the first electrolyte layer and which generates oxygen, and a third electrode which is provided on a second principal surface of the second electrolyte layer and which generates hydrogen.

## Description

### Technical Field

The present disclosure relates to an electrochemical cell.

### Background Art

As one method for producing hydrogen, high-temperature steam electrolysis using a solid oxide electrochemical cell (SOEC) is known. In high-temperature steam electrolysis, by using thermal energy as energy needed for electrolysis reactions, high conversion efficiency can be achieved. Oxide-ion conductors, such as yttria-stabilized zirconia, are utilized as electrolytes in solid oxide electrochemical cells.

In high-temperature steam electrolysis, steam is supplied to a hydrogen electrode and is decomposed into hydrogen and oxide ions. Oxide ions are conducted through an electrolyte layer to reach an oxygen electrode, and are converted into oxygen at the oxygen electrode. A mixed gas containing the produced hydrogen and residual steam is discharged from the hydrogen electrode.

In consideration of use of hydrogen, it is desired to increase the purity of the produced hydrogen. PTL 1 describes a power storage system in which a mixed gas of hydrogen and steam is passed through a condenser to remove water, and then, hydrogen is compressed and stored in a hydrogen storage tank.

### Citation List

### Patent Literature

PTL 1: Japanese Unexamined Patent Application Publication No. 2010-176939
PTL 2: Japanese Unexamined Patent Application Publication No. 2007-77464

### Summary of Invention

### Technical Problem

The existing system described above is required to be newly equipped with an apparatus in order to perform hydrogen separation by increasing the purity of the produced hydrogen, in a mixed gas containing hydrogen obtained by steam electrolysis, or by converting the produced hydrogen into a hydrogen compound. Accordingly, the existing configuration has a problem in that the system becomes complicated.

The present disclosure provides an electrochemical cell which can perform both steam electrolysis and hydrogen separation without requiring a complicated system.

### Solution to Problem

The present disclosure provides an electrochemical cell including a first electrolyte layer containing an oxide-ion conductor, a second electrolyte layer containing a proton conductor, a first electrode which is disposed between the first electrolyte layer and the second electrolyte layer and in contact with a first principal surface of the first electrolyte layer and a first principal surface of the second electrolyte layer and into which a gas flows, a second electrode which is provided on a second principal surface of the first electrolyte layer and which generates oxygen, and a third electrode which is provided on a second principal surface of the second electrolyte layer and which generates hydrogen. Advantageous Effects of Invention

The present disclosure provides an electrochemical cell which can perform both steam electrolysis and hydrogen separation without requiring a complicated system.

### Brief Description of Drawings

[Fig. 1] Fig. 1 is a perspective view, partially including a cross section, showing an electrochemical cell according to Embodiment 1 of the present disclosure.
[Fig. 2] Fig. 2 is a cross-sectional view taken along the line I-I of the electrochemical cell shown in Fig. 1.
[Fig. 3] Fig. 3 is a schematic diagram showing an example of an electrochemical reaction in the electrochemical cell according to Embodiment 1 of the present disclosure.
[Fig. 4] Fig. 4 is a schematic diagram showing an example of an electrochemical reaction in a modification example of the electrochemical cell according to Embodiment 1 of the present disclosure.
[Fig. 5] Fig. 5 is a schematic diagram showing an example of a cross section of an electrochemical cell according to Embodiment 2 of the present disclosure.
[Fig. 6] Fig. 6 is a schematic diagram showing an example of a cross section of an electrochemical cell according to Embodiment 3 of the present disclosure.
[Fig. 7] Fig. 7 is a schematic diagram showing an example of a cross section of an electrochemical cell according to Embodiment 4 of the present disclosure.
[Fig. 8] Fig. 8 is a schematic diagram showing an example of an electrochemical reaction in the electrochemical cell according to Embodiment 4 of the present disclosure.
[Fig. 9] Fig. 9 is a schematic diagram showing an example of an electrochemical reaction in an electrochemical cell according to Embodiment 5 of the present disclosure.

### Description of Embodiments

### (Underlying Knowledge Forming Basis of the Present Disclosure)

In the system according to PTL 1 described in the "Background Art", a mixed gas containing hydrogen gas produced in the steam electrochemical cell and steam is condensed with a condenser, and hydrogen gas is separated from water by steam separation. On the other hand, in a system according to PTL 2, hydrogen obtained by steam electrolysis is made to react with a reduction medium to produce a new hydrogen compound, and thus, hydrogen is converted into a compound that is suitable for storage or transportation.

As described above, in the existing configuration, in order to separate hydrogen, a system is required to be newly equipped with an apparatus, and as a result, it is considered that the system becomes complicated.

Accordingly, the present inventors have performed thorough studies on techniques for separating hydrogen from a mixed gas obtained by steam electrolysis. As a result, the present inventors have found that, by using a proton conductor, hydrogen separation can be performed without being equipped with a new apparatus. That is, the present inventors have found that, by combining a steam electrochemical cell with hydrogen separation using a proton conductor, produced hydrogen can be discharged outside the system without relying on a complicated system.

The finding of the present inventors described above has not been disclosed in the past and shows an electrochemical cell with a new structure. Specifically, the present disclosure provides the following aspects.

### (Outline of aspects of the present disclosure)

An electrochemical cell according to a first aspect of the present disclosure includes:
a first electrolyte layer containing an oxide-ion conductor;
a second electrolyte layer containing a proton conductor;
a first electrode which is disposed between the first electrolyte layer and the second electrolyte layer and in contact with a first principal surface of the first electrolyte layer and a first principal surface of the second electrolyte layer and into which a gas flows;
a second electrode which is provided on a second principal surface of the first electrolyte layer and which generates oxygen; and
a third electrode which is provided on a second principal surface of the second electrolyte layer and which generates hydrogen.

In the electrochemical cell according to the first aspect, only hydrogen produced by decomposition of steam at the first electrode can be separated from steam and the like by the second electrolyte layer and the third electrode and taken out of the system. Therefore, the electrochemical cell according to the first aspect can separate hydrogen from steam by using a simple structure including a single electrochemical cell without being equipped with an apparatus, such as a steam separator. Accordingly, the electrochemical cell according to the first aspect can perform both steam electrolysis and hydrogen separation without requiring a complicated system.

In a second aspect of the present disclosure, for example, the first electrode of the electrochemical cell according to the first aspect may contain a cermet containing Ni.

In the electrochemical cell according to the second aspect, the first electrode contains Ni. By using this structure, the steam that has flowed into the first electrode can be separated into hydrogen and oxide ions. The hydrogen generated in the first electrode is separated into protons in the vicinity of the second electrolyte layer. The separated protons pass through the second electrolyte layer and can produce hydrogen at the third electrode. The hydrogen produced at the third electrode can be taken out of the system as high purity hydrogen.

In a third aspect of the present disclosure, for example, the first electrode of the electrochemical cell according to the first aspect may contain a material having an oxygen reduction activity.

In the electrochemical cell according to the third aspect, the first electrode contains a material having an oxygen reduction activity. By using this structure, the steam that has flowed into the first electrode can be separated into oxygen and protons. The protons generated in the first electrode pass through the second electrolyte layer and can produce hydrogen at the third electrode.

In a fourth aspect of the present disclosure, for example, the electrochemical cell according to any one of the first to third aspects may further include a power supply which is connected to the second electrode and the third electrode and which supplies power.

Since the electrochemical cell according to the fourth aspect includes a power supply, by controlling the power supply, hydrogen can be appropriately separated.

In a fifth aspect of the present disclosure, for example, the electrochemical cell according to any one of the first to fourth aspects may further include a first path which is connected to the first electrode and which leads steam to the first electrode.

In the electrochemical cell according to the fifth aspect, hydrogen can be appropriately supplied to the first electrode.

In a sixth aspect of the present disclosure, for example, in the electrochemical cell according to the fifth aspect, a gas that is supplied from the first path may contain steam and hydrogen.

In the electrochemical cell according to the sixth aspect, steam supplied from the first path contains hydrogen. By using this structure, in the electrochemical cell according to the sixth aspect, the oxygen partial pressure in the first electrode can be decreased. Therefore, in the electrochemical cell according to the sixth aspect, it is possible to suppress steam oxidation of the first electrode.

In a seventh aspect of the present disclosure, for example, in the electrochemical cell according to any one of the first to sixth aspects, the oxide-ion conductor may contain yttria-stabilized zirconia.

In the electrochemical cell according to the seventh aspect, by using yttria-stabilized zirconia having high chemical stability and oxide ion conductivity, it is possible to improve durability and electrochemical performance of the cell.

In an eighth aspect of the present disclosure, for example, in the electrochemical cell according to any one of the first to seventh aspects, the proton conductor may contain at least one selected from the group consisting of BaZr₁₋ₓ₁M1ₓ₁O_{3-δ}, BaCe₁₋ₓ₂M2ₓ₂O_{3-δ}, and BaZr_{1-x3-y3}Ceₓ₃M3_{y3}O_{3-δ}, where M1, M2, and M3 each contain at least one selected from the group consisting of Pr, Nd, Pm, Sm, Eu, Gd, Tb, Dy, Ho, Er, Tm, Yb, Y, Sc, In, and Lu; a value of x1 satisfies 0 < x1 < 1; a value of x2 satisfies 0 < x2 < 1; a value of x3 satisfies 0 < x3 < 1; a value of y3 satisfies 0 < y3 < 1; and a value of δ satisfies 0 < δ < 0.5.

In the electrochemical cell according to the eighth aspect, by using a proton conductor having high chemical stability and proton conductivity, it is possible to improve durability and electrochemical performance of the cell.

In a ninth aspect of the present disclosure, for example, in the electrochemical cell according to the eighth aspect, the proton conductor may be formed of BaZr₁₋ₓ₁M1ₓ₁O_{3-δ}.

In the electrochemical cell according to the ninth aspect, by using BaZr₁₋ₓ₁M1ₓ₁O_{3-δ} having high chemical stability and proton conductivity as the proton conductor, it is possible to improve durability and electrochemical performance of the cell.

An electrochemical cell according to a tenth aspect of the present disclosure includes:
a first electrolyte layer containing an oxide-ion conductor;
a second electrolyte layer containing a proton conductor;
a first electrode which is disposed between the first electrolyte layer and the second electrolyte layer and in contact with a first principal surface of the first electrolyte layer and a first principal surface of the second electrolyte layer and which generates steam;
a second electrode which is provided on a second principal surface of the first electrolyte layer and into which oxygen flows; and
a third electrode which is provided on a second principal surface of the second electrolyte layer and into which hydrogen flows.

In the electrochemical cell according to the tenth aspect, by using hydrogen and oxygen, electrical energy can be extracted outside. Furthermore, in the electrochemical cell according to the tenth aspect, the hydrogen that has passed through the second electrolyte layer is supplied to the first electrode. For example, even in the case where reformed hydrogen is supplied to the third electrode, carbon dioxide, steam, and the like, which are by-products of reforming, are separated from hydrogen by the second electrolyte layer. Therefore, the electrochemical cell according to the tenth aspect is effective in improving power generation performance and suppressing carbon precipitation.

An electrochemical cell according to an eleventh aspect of the present disclosure includes:
a first electrolyte layer containing an oxide-ion conductor;
a second electrolyte layer containing a proton conductor;
a first electrode which is disposed between the first electrolyte layer and the second electrolyte layer and in contact with a first principal surface of the first electrolyte layer and a first principal surface of the second electrolyte layer, into which hydrogen flows, and which generates steam;
a second electrode which is provided on a second principal surface of the first electrolyte layer and into which oxygen flows; and
a third electrode which is provided on a second principal surface of the second electrolyte layer.

In the electrochemical cell according to the eleventh aspect, by using hydrogen and oxygen, electrical energy can be extracted outside.

Embodiments of the present disclosure will be described in detail below with reference to the drawings. Note that the present disclosure is not limited to the embodiments below.

### (Embodiment 1)

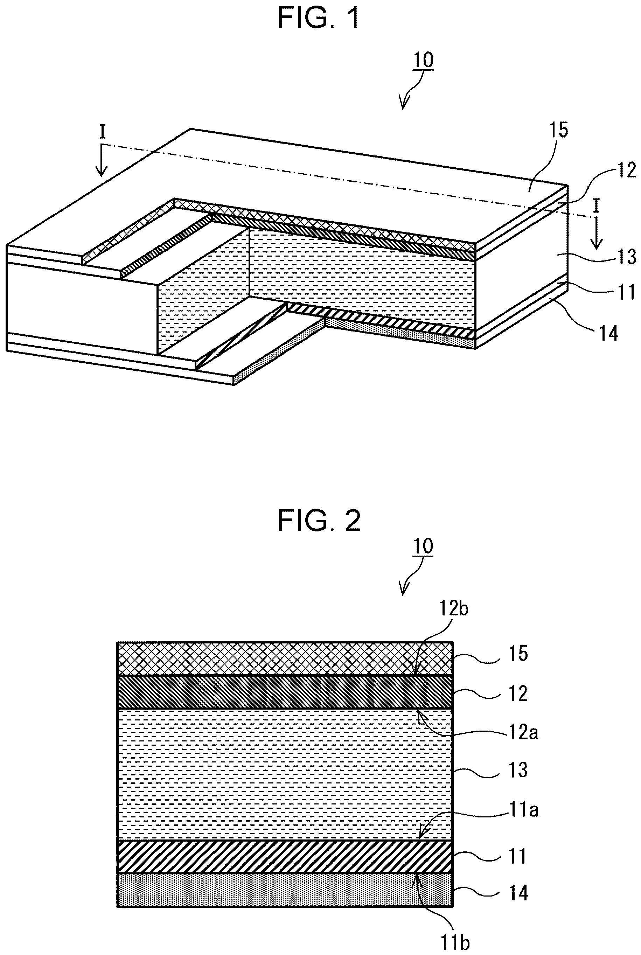

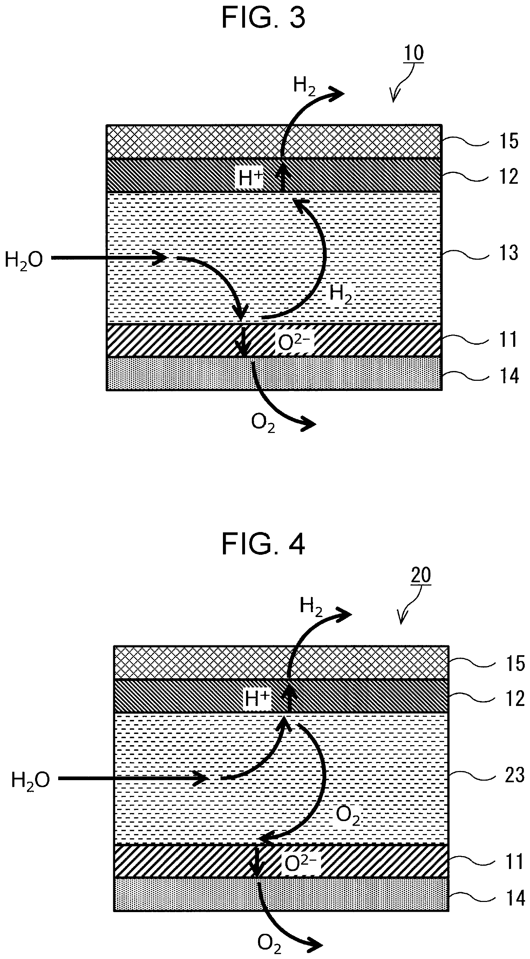

Fig. 1 is a perspective view, partially including a cross section, showing an electrochemical cell 10 according to Embodiment 1 of the present disclosure. Fig. 2 is a cross-sectional view taken along the line I-I of the electrochemical cell 10 shown in Fig. 1. Fig. 3 is a schematic diagram showing an example of an electrochemical reaction in the electrochemical cell 10 according to Embodiment 1. In Fig. 1, in order to facilitate understanding of the structure of the electrochemical cell 10, for convenience, part of the electrochemical cell 10 is shown by a cross section.

Furthermore, in the present description, the terms "hydrogen" and "oxygen" mean "hydrogen gas" and "oxygen gas", respectively, unless otherwise stated.

As shown in Figs. 1 and 2, the electrochemical cell 10 includes a first electrolyte layer 11, a second electrolyte layer 12, a first electrode 13, a second electrode 14, and a third electrode 15. The first electrolyte layer 11 contains an oxide-ion conductor. The second electrolyte layer 12 contains a proton conductor. The first electrode 13 is disposed between the first electrolyte layer 11 and the second electrolyte layer 12. The first electrode 13 is in contact with a first principal surface 11a of the first electrolyte layer 11 and a first principal surface 12a of the second electrolyte layer 12. A gas flows into the first electrode 13. The second electrode 14 is provided on a second principal surface 11b of the first electrolyte layer 11 and generates oxygen. The third electrode 15 is provided on a second principal surface 12b of the second electrolyte layer 12 and generates hydrogen. The electrochemical cell 10 is a component that is used, for example, for constituting an electrochemical device.

The electrochemical cell 10 shown in Fig. 1 has a planar shape. However, the shape of the electrochemical cell 10 is not limited as long as the electrochemical cell 10 has a multilayer structure in which the first electrolyte layer 11, the second electrolyte layer 12, the first electrode 13, the second electrode 14, and the third electrode 15 are arranged in the order described above. For example, the electrochemical cell 10 may have a cylindrical shape. In such a case, the first electrolyte layer 11, the second electrolyte layer 12, the first electrode 13, the second electrode 14, and the third electrode 15 may be stacked in this order or in a reverse order from the inside perimeter to the outside perimeter of the cylinder.

In the electrochemical cell 10, for example, the first electrode 13 may contain a cermet containing Ni as an electrode material. Here, the cermet containing Ni is a mixture of Ni and a ceramic material. Examples of the cermet containing Ni include Ni-YSZ, Ni-BZYb, and Ni-YSZ-BZYb. Note that YSZ represents yttria-stabilized zirconia. BZYb represents ytterbium-doped barium zirconate. For example, the barium zirconate has a composition represented by BaZr₁₋ₓYbₓO_{3-δ} (where a value of x satisfies 0 < x < 1; and a value of δ satisfies 0 < δ < 1). Note that the first electrode 13 may be formed of a plurality of materials. The first electrode 13 can decompose inflowing steam into hydrogen and further decompose hydrogen into protons. As will be described later, the hydrogen obtained by decomposition of steam moves in the first electrode 13 from the first electrolyte layer 11 toward the second electrolyte layer 12. Therefore, the first electrode 13 needs to have a structure having gas diffusibility (e.g., to be a porous body). The term "porous body" means, for example, a material having a porosity of more than or equal to 20%. The porosity can be measured by an Archimedean method or mercury porosimetry.

Next, with reference to Fig. 3, an example of a steam electrolysis reaction in the electrochemical cell 10 will be described.

First, steam is supplied to the first electrode 13. The supplied steam is separated into hydrogen and oxide ions in the vicinity of the interface between the first electrolyte layer 11 and the first electrode 13. The oxide ions pass through the first electrolyte layer 11 and become oxygen gas at the second electrode 14, and the oxygen gas is discharged outside the system. The hydrogen gas separated in the vicinity of the interface between the first electrolyte layer 11 and the first electrode 13 moves in the first electrode 13 and is separated into protons in the vicinity of the second electrolyte layer 12. The separated protons pass through the second electrolyte layer 12 and become hydrogen gas at the third electrode 15, and the hydrogen gas is discharged outside the system. In this way, in the electrochemical cell 10, the second electrolyte layer 12 allows only protons to pass therethrough, and thus does not allow steam to pass therethrough. Accordingly, high purity hydrogen gas can be obtained from the third electrode 15.

The individual components of the electrochemical cell 10 will be described below in more detail.

The first electrolyte layer 11 contains an oxide-ion conductor as described above. Examples of the oxide-ion conductor contained in the first electrolyte layer 11 include stabilized zirconia, lanthanum gallate-based oxides, and ceria-based oxides. The oxide-ion conductor contained in the first electrolyte layer 11 may contain yttria-stabilized zirconia. Yttria-stabilized zirconia has high chemical stability and oxide ion conductivity. Therefore, by using yttria-stabilized zirconia for the oxide-ion conductor of the first electrolyte layer 11, it is possible to improve durability and electrochemical performance of the electrochemical cell 10.

The second electrolyte layer 12 contains a proton conductor as described above. The proton conductor contained in the second electrolyte layer 12 is, for example, an oxide (i.e., proton-conducting oxide). Specific examples thereof include proton conductors, such as BaZrO₃-based oxides, BaCeZrO₃ -based oxides, and BaCeO₃-based oxides. The proton conductor contained in the second electrolyte layer 12 may contain, for example, at least one selected from the group consisting of BaZr₁₋ₓ₁M1ₓ₁O_{3-δ}, BaCe₁₋ₓ₂M2ₓ₂O_{3-δ}, and BaZr_{1-x3-y3}Ceₓ₃M3_{y3}O_{3-δ}, where M1, M2, and M3 each contain at least one selected from the group consisting of Pr, Nd, Pm, Sm, Eu, Gd, Tb, Dy, Ho, Er, Tm, Yb, Y, Sc, In, and Lu; a value of x1 satisfies 0 < x1 < 1; a value of x2 satisfies 0 < x2 < 1; a value of x3 satisfies 0 < x3 < 1; a value of y3 satisfies 0 < y3 < 1; and a value of δ satisfies 0 < δ < 0.5. BaZr₁₋ₓ₁M1ₓ₁O_{3-δ}, BaCe₁₋ₓ₂M2ₓ₂O_{3-δ}, and BaZr_{1-x3-y3}Ceₓ₃M3_{y3}O_{3-δ} have high chemical stability and proton conductivity. Therefore, by using a proton conductor formed of BaZr₁₋ₓ₁M1ₓ₁O_{3-δ}, BaCe₁₋ₓ₂M2ₓ₂O_{3-δ}, and/or BaZr_{1-x3-y3}Ceₓ₃M3_{y3}O_{3-δ} (i.e., a proton conductor containing at least one selected from the group consisting of BaZr₁₋ₓ₁M1ₓ₁O_{3-δ}, BaCe₁₋ₓ₂M2ₓ₂O_{3-δ}, and BaZr_{1-x3-y3}Ceₓ₃M3_{y3}O_{3-δ}) for the second electrolyte layer 12, durability and electrochemical performance of the electrochemical cell 10 can be improved. The proton conductor contained in the second electrolyte layer 12 may be formed of BaZr₁₋ₓ₁M1ₓ₁O_{3-δ}. BaZr₁₋ₓ₁M1ₓ₁O_{3-δ} has higher chemical stability and proton conductivity. Therefore, by using a proton conductor formed of BaZr₁₋ₓ₁M1ₓ₁O_{3-δ} for the second electrolyte layer 12, durability and electrochemical performance of the electrochemical cell 10 can be further improved.

The second electrode 14 contains a catalyst for facilitating the electrochemical oxidation reaction of oxide ions. Examples of the catalyst include oxides containing at least one selected from the group consisting of Mn, Fe, Co, and Ni. Specific examples of the catalyst include lanthanum strontium cobalt ferrite complex oxide (LSCF), lanthanum strontium cobalt complex oxide (LSC), lanthanum strontium ferrite complex oxide (LSF), lanthanum strontium manganese complex oxide (LSM), barium strontium cobalt ferrite complex oxide (BSCF), samarium strontium cobalt complex oxide (SSC), lanthanum nickel ferrite complex oxide, lanthanum nickel complex oxide, and barium gadolinium lanthanum cobalt complex oxide. The catalyst may be a complex of an oxide containing at least one selected from the group consisting of Mn, Fe, Co, and Ni and another oxide or a metal. In order to facilitate diffusion of produced oxygen, the second electrode 14 may be a porous body.

The second electrode 14 may contain, as an electrode material, for example, LaSrCoO_{3-δ}, LaSrFeO_{3-δ}, or LaSrMnO_{3-δ}. The electrode material contained in the second electrode 14 may be LaSrCoO_{3-δ} or LaSrFeCoO_{3-δ}. When the second electrode 14 contains LaSrCoO_{3-δ}, LaSrFeO_{3-δ}, or LaSrMnO_{3-δ}, reliability and electrode performance of the electrochemical cell 10 can be improved. Note that a value of δ represents the oxygen deficiency. In the second electrode 14, the value of δ satisfies 0 < δ < 0.5.

The third electrode 15 contains a catalyst for electrochemically reducing protons. As the catalyst, a metal, such as Pd, P, or Ni, can be used. The third electrode 15 may be formed of a cermet. When the third electrode 15 is formed of a cermet, it is possible to expect an effect of increasing the number of reaction active sites for reducing protons. Examples of the cermet include a mixture of Ni and a proton-conducting oxide, such as Ni-BZYb. Note that BZYb is as described above. When the third electrode 15 contains Ni-BZYb, reliability and electrode performance of the electrochemical cell 10 can be improved. In order to facilitate diffusion of hydrogen, the third electrode 15 may be a porous body.

The first electrode 13 may include a functional layer. The functional layer is provided at a position in contact with the first electrolyte layer 11 or the second electrolyte layer 12. In this case, the functional layer has an effect of facilitating the reaction at the electrode. The functional layer can be fabricated, for example, by changing the weight ratio of Ni in the cermet in the first electrode 13 or by decreasing the particle size of Ni.

Next, a modification example of an electrochemical cell according to Embodiment 1 of the present disclosure will be described.

Fig. 4 is a schematic diagram showing an example of an electrochemical reaction in an electrochemical cell 20, which is a modification example of the electrochemical cell according to Embodiment 1 of the present disclosure.

The electrochemical cell 20 includes a first electrode 23 instead of the first electrode 13 of the electrochemical cell 10. The structure of the electrochemical cell 20, other than the first electrode 23, is the same as that of the electrochemical cell 10, and therefore, a description thereof will be omitted herein.

The first electrode 23 contains, as an electrode material, a material having an oxygen reduction activity. Examples of the material having an oxygen reduction activity include LaSrCoO_{3-δ}, LaSrFeO_{3-δ}, and LaSrMnO_{3-δ}. The first electrode 23 may contain, as a material having an oxygen reduction activity, LaSrCoO_{3-δ} or LaSrFeCoO_{3-δ}. When the first electrode 23 contains LaSrCoO_{3-δ} or LaSrFeCoO_{3-δ}, reliability and electrode performance of the electrochemical cell 20 can be improved. Note that a value of δ represents the oxygen deficiency. In the first electrode 23, the value of δ satisfies 0 < δ < 0.5.

The first electrode 23 may include a functional layer. The functional layer is provided at a position in contact with the first electrolyte layer 11 or the second electrolyte layer 12. In this case, the functional layer has an effect of facilitating the reaction at the electrode. The functional layer can be fabricated, for example, by compositing an electrode material with an electrolyte material or decreasing the particle size of an electrode material.

In the electrochemical cells 10 and 20 according to Embodiment 1, because of the structure described above, only hydrogen produced by decomposition of steam at the first electrode 13 or 23 can be separated from steam and the like by the second electrolyte layer 12 and the third electrode 15 and taken out of the system. Therefore, the electrochemical cells 10 and 20 can separate high purity hydrogen from steam by using a simple structure without being equipped with an apparatus, such as a steam separator. Thus, the electrochemical cells 10 and 20 according to Embodiment 1 do not require a complicated system. Accordingly, both steam electrolysis and hydrogen separation can be performed.

Some other embodiments will be described below. The same reference signs are used for the components of the other embodiments that are common to those of Embodiment 1, and the description thereof may be omitted. The description for one embodiment can be applied to other embodiments unless technically inconsistent. The embodiments may be combined with one another unless technically inconsistent.

### (Embodiment 2)

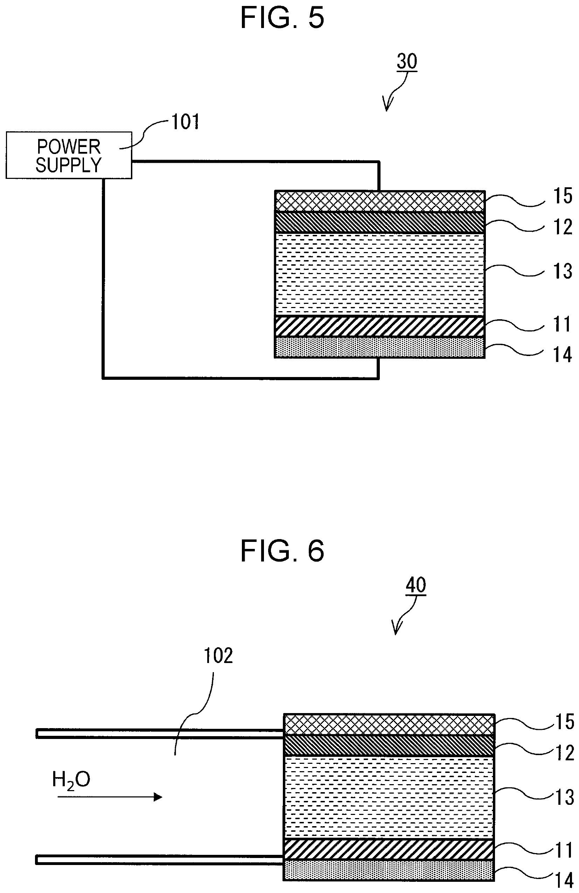

With reference to Fig. 5, a structure of an electrochemical cell 30 according to Embodiment 2 of the present disclosure will be described. Fig. 5 is a schematic diagram showing an example of a cross section of the electrochemical cell 30 according to Embodiment 2 of the present disclosure.

The electrochemical cell 30 according to Embodiment 2 has a structure in which a power supply 101 is further provided on the electrochemical cell 10 according to Embodiment 1, the power supply 101 being connected to the second electrode 14 and the third electrode 15 and supplying power. The electrochemical cell 30 includes a power supply. Therefore, in the electrochemical cell 30, by controlling the power supply, hydrogen can be appropriately separated. Although the structure in which the power supply 101 is provided on the electrochemical cell 10 has been described, a power supply 101 may be provided on the electrochemical cell 20.

### (Embodiment 3)

With reference to Fig. 6, a structure of an electrochemical cell 40 according to Embodiment 3 of the present disclosure will be described. Fig. 6 is a schematic diagram showing an example of a cross section of the electrochemical cell 40 according to Embodiment 3 of the present disclosure.

The electrochemical cell 40 according to Embodiment 3 has a structure in which a first path 102 is further provided on the electrochemical cell 10 according to Embodiment 1, the first path 102 being connected to the first electrode 13 and leading steam to the first electrode 13. In order to supply steam to the first path 102, a steam supply source (not shown) may be connected to the first path 102. As the steam supply source, for example, an evaporator may be used. In the electrochemical cell 40, steam can be appropriately supplied to the first electrode 13 through the first path 102.

A gas supplied from the first path 102, i.e., steam, may further contain hydrogen. When the steam supplied from the first path 102 contains hydrogen, in the electrochemical cell 40, the oxygen partial pressure in the first electrode 13 can be decreased. Therefore, in the electrochemical cell 40, it is possible to suppress steam oxidation of the first electrode 13.

Although the structure in which the first path 102 is provided on the electrochemical cell 10 has been described, a first path 102 may be provided on the electrochemical cell 20.

### (Embodiment 4)

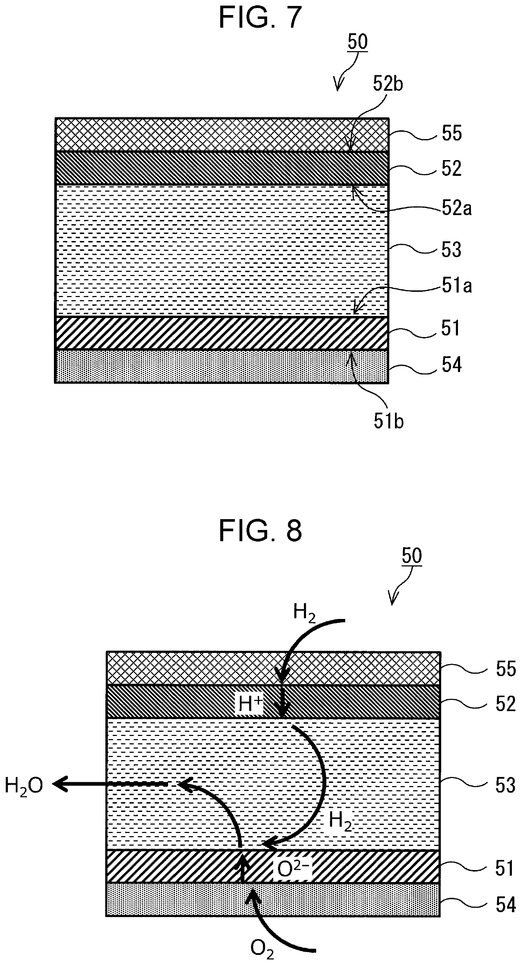

With reference to Figs. 7 and 8, a structure of an electrochemical cell 50 according to Embodiment 4 of the present disclosure will be described. Fig. 7 is a schematic diagram showing an example of a cross section of the electrochemical cell 50 according to Embodiment 4 of the present disclosure. Fig. 8 is a schematic diagram showing an example of an electrochemical reaction in the electrochemical cell 50 according to Embodiment 4 of the present disclosure.

As shown in Fig. 7, the electrochemical cell 50 includes a first electrolyte layer 51, a second electrolyte layer 52, a first electrode 53, a second electrode 54, and a third electrode 55. The first electrolyte layer 51 contains an oxide-ion conductor. The second electrolyte layer 52 contains a proton conductor. The first electrode 53 is disposed between the first electrolyte layer 51 and the second electrolyte layer 52. The first electrode 53 is in contact with a first principal surface 51a of the first electrolyte layer 51 and a first principal surface 52a of the second electrolyte layer 52. The first electrode 53 generates steam. The second electrode 54 is provided on a second principal surface 51b of the first electrolyte layer 51, and oxygen flows into the second electrode 54. The third electrode 55 is provided on a second principal surface 52b of the second electrolyte layer 52, and hydrogen flows into the third electrode 55. The electrochemical cell 50 is a component that is used, for example, for constituting an electrochemical device.

The shape of the electrochemical cell 50 is not limited as long as the electrochemical cell 50 has a multilayer structure in which the first electrolyte layer 51, the second electrolyte layer 52, the first electrode 53, the second electrode 54, and the third electrode 55 are arranged in the order described above. The electrochemical cell 50 may have a planar shape or cylindrical shape. In the case where the electrochemical cell 50 has a cylindrical shape, for example, the third electrode 55, the second electrolyte layer 52, the first electrode 53, the first electrolyte layer 51, and the second electrode 54 may be stacked in this order from the inside perimeter to the outside perimeter of the cylinder.

The same materials as those for the first electrolyte layer 11 described in Embodiment 1 can be used for the first electrolyte layer 51, and therefore, a detailed description thereof will be omitted herein.

The same materials as those for the second electrolyte layer 12 described in Embodiment 1 can be used for the second electrolyte layer 52, and therefore, a detailed description thereof will be omitted herein.

The same materials as those for the first electrodes 13 and 23 described in Embodiment 1 can be used for the first electrode 53, and therefore, a detailed description thereof will be omitted herein.

The same materials as those for the second electrode 14 described in Embodiment 1 can be used for the second electrode 54, and therefore, a detailed description thereof will be omitted herein.

The same materials as those for the third electrode 15 described in Embodiment 1 can be used for the third electrode 55, and therefore, a detailed description thereof will be omitted herein.

Next, with reference to Fig. 8, an example of a power generation reaction in the electrochemical cell 50 will be described.

First, hydrogen is supplied to the third electrode 55. As hydrogen, hydrogen reformed from raw material gas or hydrogen produced by water electrolysis or the like may be used. The supplied hydrogen is separated into protons in the vicinity of the interface with the second electrolyte layer 52, and the protons move through the second electrolyte layer 52. The protons that have moved produce hydrogen gas at the interface between the first electrode 53 and the second electrolyte layer 52. Furthermore, oxygen is supplied to the second electrode 54. The supplied oxygen is separated into oxide ions at the interface with the first electrolyte layer 51, and the oxide ions move through the first electrolyte layer 51. The oxide ions that have moved react with hydrogen gas at the interface between the first electrode 53 and the first electrolyte layer 51 to produce steam.

As described above, in the electrochemical cell 50, by using hydrogen and oxygen, electrical energy can be extracted outside. Furthermore, in the electrochemical cell 50, only hydrogen that has passed through the second electrolyte layer 52 is supplied to the first electrode 53. Accordingly, for example, in the case where reformed hydrogen is supplied, carbon dioxide and steam, which are by-products of reforming, can be separated. Therefore, it is possible to obtain effects of improving power generation performance and suppressing carbon precipitation.

### (Embodiment 5)

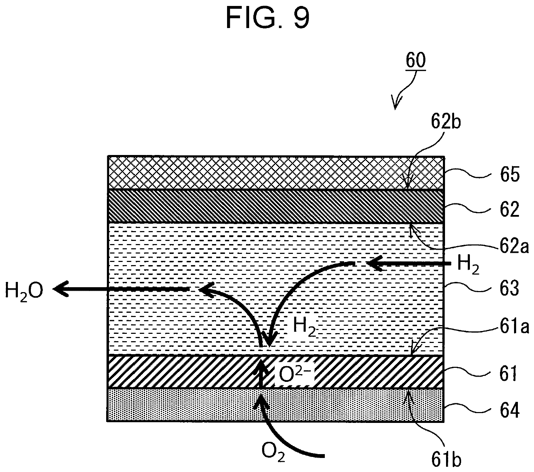

With reference to Fig. 9, a structure of an electrochemical cell 60 according to Embodiment 5 of the present disclosure will be described. Fig. 9 is a schematic diagram showing an example of an electrochemical reaction in the electrochemical cell 60 according to Embodiment 5 of the present disclosure.

With reference to Fig. 9, a structure of the electrochemical cell 60 and an example of a power generation reaction in the electrochemical cell 60 will be described.

As shown in Fig. 9, the electrochemical cell 60 includes a first electrolyte layer 61, a second electrolyte layer 62, a first electrode 63, a second electrode 64, and a third electrode 65. The first electrolyte layer 61 contains an oxide-ion conductor. The second electrolyte layer 62 contains a proton conductor. The first electrode 63 is disposed between the first electrolyte layer 61 and the second electrolyte layer 62. The first electrode 63 is in contact with a first principal surface 61a of the first electrolyte layer 61 and a first principal surface 62a of the second electrolyte layer 62. Hydrogen flows into the first electrode 63, and the first electrode 63 generates steam. The second electrode 64 is provided on a second principal surface 61b of the first electrolyte layer 61, and oxygen flows into the second electrode 64. The third electrode 65 is provided on a second principal surface 62b of the second electrolyte layer 62. The electrochemical cell 60 is a component that is used, for example, for constituting an electrochemical device.

The shape of the electrochemical cell 60 is not limited as long as the electrochemical cell 60 has a multilayer structure in which the first electrolyte layer 61, the second electrolyte layer 62, the first electrode 63, the second electrode 64, and the third electrode 65 are arranged in the order described above. The electrochemical cell 60 may have a planar shape or cylindrical shape. In the case where the electrochemical cell 60 has a cylindrical shape, for example, the third electrode 65, the second electrolyte layer 62, the first electrode 63, the first electrolyte layer 61, and the second electrode 64 may be stacked in this order from the inside perimeter to the outside perimeter of the cylinder.

The same materials as those for the first electrolyte layer 11 described in Embodiment 1 can be used for the first electrolyte layer 61, and therefore, a detailed description thereof will be omitted herein.

The same materials as those for the second electrolyte layer 12 described in Embodiment 1 can be used for the second electrolyte layer 62, and therefore, a detailed description thereof will be omitted herein.

The same materials as those for the first electrodes 13 and 23 described in Embodiment 1 can be used for the first electrode 63, and therefore, a detailed description thereof will be omitted herein.

The same materials as those for the second electrode 14 described in Embodiment 1 can be used for the second electrode 64, and therefore, a detailed description thereof will be omitted herein.

The same materials as those for the third electrode 15 described in Embodiment 1 can be used for the third electrode 65, and therefore, a detailed description thereof will be omitted herein.

Next, with reference to Fig. 9, an example of a power generation reaction in the electrochemical cell 60 will be described.

First, hydrogen is supplied to the first electrode 63. As hydrogen, hydrogen reformed from raw material gas or hydrogen produced by water electrolysis or the like may be used. Furthermore, oxygen is supplied to the second electrode 64. The supplied oxygen is separated into oxide ions at the interface with the first electrolyte layer 61, and the oxide ions move through the first electrolyte layer 61. The oxide ions that have moved react with hydrogen gas at the interface between the first electrode 63 and the first electrolyte layer 61 to produce steam.

As described above, in the electrochemical cell 60, by using hydrogen and oxygen, electrical energy can be extracted outside.

### Industrial Applicability

Electrochemical cells according to the present disclosure can be used, for example, in electrochemical devices, such as high-temperature steam electrolysis devices or fuel cells.

### Reference Signs List

10, 20, 30, 40, 50, 60 electrochemical cell
11, 51, 61 first electrolyte layer
11a, 51a, 61b first principal surface of first electrolyte layer
11b, 51b, 61b second principal surface of first electrolyte layer
12, 52, 62 second electrolyte layer
12a, 52a, 62b first principal surface of second electrolyte layer
12b, 52b, 62b second principal surface of second electrolyte layer
13, 23, 53, 63 first electrode
14, 54, 64 second electrode
15, 55, 65 third electrode

## Claims

1. An electrochemical cell comprising:
a first electrolyte layer containing an oxide-ion conductor;
a second electrolyte layer containing a proton conductor;
a first electrode which is disposed between the first electrolyte layer and the second electrolyte layer and in contact with a first principal surface of the first electrolyte layer and a first principal surface of the second electrolyte layer and into which a gas flows;
a second electrode which is provided on a second principal surface of the first electrolyte layer and which generates oxygen; and
a third electrode which is provided on a second principal surface of the second electrolyte layer and which generates hydrogen.

2. The electrochemical cell according to Claim 1, wherein the first electrode contains a cermet containing Ni.

3. The electrochemical cell according to Claim 1, wherein the first electrode contains a material having an oxygen reduction activity.

4. The electrochemical cell according to any one of Claims 1 to 3, further comprising a power supply which is connected to the second electrode and the third electrode and which supplies power.

5. The electrochemical cell according to any one of Claims 1 to 4, further comprising a first path which is connected to the first electrode and which leads steam to the first electrode.

6. The electrochemical cell according to Claim 5, wherein a gas that is supplied from the first path contains steam and hydrogen.

7. The electrochemical cell according to any one of Claims 1 to 6, wherein the oxide-ion conductor contains yttria-stabilized zirconia.

8. The electrochemical cell according to any one of Claims 1 to 7, wherein the proton conductor contains at least one selected from the group consisting of BaZr₁₋ₓ₁M1ₓ₁O_{3-δ}, BaCe₁₋ₓ₂M2ₓ₂O_{3-δ}, and BaZr_{1-x3-y3}Cex₃M3_{y3}O_{3-δ},
where M1, M2, and M3 each contain at least one selected from the group consisting of Pr, Nd, Pm, Sm, Eu, Gd, Tb, Dy, Ho, Er, Tm, Yb, Y, Sc, In, and Lu;
a value of x1 satisfies 0 < x1 < 1;
a value of x2 satisfies 0 < x2 < 1;
a value of x3 satisfies 0 < x3 < 1;
a value of y3 satisfies 0 < y3 < 1; and
a value of δ satisfies 0 < δ < 0.5.

9. The electrochemical cell according to Claim 8, wherein the proton conductor is formed of BaZr₁₋ₓ₁M1ₓ₁O_{3-δ}.

10. An electrochemical cell comprising:
a first electrolyte layer containing an oxide-ion conductor;
a second electrolyte layer containing a proton conductor;
a first electrode which is disposed between the first electrolyte layer and the second electrolyte layer and in contact with a first principal surface of the first electrolyte layer and a first principal surface of the second electrolyte layer and which generates steam;
a second electrode which is provided on a second principal surface of the first electrolyte layer and into which oxygen flows; and
a third electrode which is provided on a second principal surface of the second electrolyte layer and into which hydrogen flows.

11. An electrochemical cell comprising:
a first electrolyte layer containing an oxide-ion conductor;
a second electrolyte layer containing a proton conductor;
a first electrode which is disposed between the first electrolyte layer and the second electrolyte layer and in contact with a first principal surface of the first electrolyte layer and a first principal surface of the second electrolyte layer, into which hydrogen flows, and which generates steam;
a second electrode which is provided on a second principal surface of the first electrolyte layer and into which oxygen flows; and
a third electrode which is provided on a second principal surface of the second electrolyte layer.
